(19) Europäisches Patentamt
European Patent Office
Office européen des brevets

(11) **EP 3 156 939 A1**

(12) **EUROPEAN PATENT APPLICATION**

(43) Date of publication:
**19.04.2017 Bulletin 2017/16**

(51) Int Cl.:
***G06K 9/00*** *(2006.01)*     ***G08G 1/04*** *(2006.01)*

(21) Application number: **16191381.9**

(22) Date of filing: **29.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.10.2015   CN 201510660793**

(71) Applicant: **FUJITSU LIMITED**
**Kawasaki-shi Kanagawa 211-8588 (JP)**

(72) Inventors:
• **Wu, Jianrong**
  **Beijing 100027 (CN)**
• **Tan, Zhiming**
  **Beijing 100027 (CN)**

(74) Representative: **Hoffmann Eitle**
**Patent- und Rechtsanwälte PartmbB**
**Arabellastraße 30**
**81925 München (DE)**

(54) **METHOD AND APPARATUS FOR DETECTING A TRAFFIC STATE AND ELECTRONIC EQUIPMENT**

(57)     Embodiments of the present disclosure provide a method and apparatus for detecting a traffic state and electronic equipment. The apparatus includes: a first calculating unit configured to detect a contour of an object from a region of interest of a traffic surveillance image to generate a contour image, and calculate an occupation ratio of the contour in the region of interest based on the contour image; a first detecting unit configured to detect whether there exists an object of a predetermined size moving in the region of interest, and determine a motion state of a vehicle in the region of interest; and a first determining unit configured to determine a traffic state according to the occupation ratio and the motion state. The embodiments of the present disclosure determine a traffic state according to the number of vehicles and motion states of the vehicles in the traffic surveillance image, thereby more accurately obtaining traffic state information.

Figure 8

**Description**

Technical Field

The present disclosure relates to the field of information technologies, and in particular to a method and apparatus for detecting a traffic state and electronic equipment.

Background

As the development of economics, more and more vehicles enter into lives of the people. However, as the rapid increase of the number of vehicles, problems of traffic jams and traffic security become more severe. Thanks to the development of the information technologies, a concept of intelligent transport was proposed, and the transport problems are expected to be solved by technological means.

Traffic state detection is a part of the intelligent transport, which is able to provide important information for transport management. In the intelligent transport technologies, an image processing technology may usually be adopted, in which traffic surveillance images are analyzed, so as to obtain traffic state information.

It should be noted that the above description of the background art is merely provided for clear and complete explanation of the present disclosure and for easy understanding by those skilled in the art. And it should not be understood that the above technical solution is known to those skilled in the art as it is described in the background of the present disclosure.

Summary

It was found by the inventors of this application that in an existing traffic state detection method, the number of vehicles on the road is often detected, so as to judge a traffic state. However, moving states of the vehicles are not taken into account in the detection method, hence, traffic state information cannot be obtained more accurately, thereby affecting efficiency of the transport management.

For example, in a case where the number of vehicles on the road is relatively large, if the vehicles are static, a relatively severe traffic jam may possibly occur due to a traffic accident. And if the vehicles may still keep a suitable driving speed, it shows that only a vehicle flowrate is relatively large, and no traffic jam occurs. For the two traffic states, the traffic jam and the relatively large vehicle flowrate, different transport management schemes may be adopted for management. However, if the above existing traffic state detection method is still adopted, the two traffic states, the traffic jam and the relatively large vehicle flowrate, cannot be easily differentiated, and therefore, it is hard to use a corresponding transport management scheme for management, and the efficiency of the transport management is affected.

Embodiments of this application provide a method and apparatus for detecting a traffic state and electronic equipment, in which a traffic state is determined according to the number of vehicles and moving states of the vehicles in a traffic surveillance image, thereby more accurately obtaining traffic state information.

According to a first aspect of the embodiments of the present disclosure, there is provided an apparatus for detecting a traffic state, including:

a first calculating unit configured to detect a contour of an object from a region of interest of a traffic surveillance image to generate a contour image, and calculate an occupation ratio of the contour in the region of interest based on the contour image;

a first detecting unit configured to detect whether there exists an object of a predetermined size moving in the region of interest, and determine a motion state of a vehicle in the region of interest; and

a first determining unit configured to determine a traffic state according to the occupation ratio and the motion state.

According to a second aspect of the embodiments of the present disclosure, there is provided electronic equipment, including the apparatus for detecting a traffic state as described in the first aspect of the above embodiment.

According to a third aspect of the embodiments of the present disclosure, there is provided a method for detecting a traffic state, including:

detecting a contour of an object from a region of interest of a traffic surveillance image to generate a contour image, and calculating an occupation ratio of the contour in the region of interest based on the contour image;

detecting whether there exists an object of a predetermined size moving in the region of interest, and determining a moving state of a vehicle in the region of interest; and

determining a traffic state according to the occupation ratio and the motion state.

An advantage of the embodiments of this application exists in that a traffic state is determined according to the number of vehicles and motion states of the vehicles in a traffic surveillance image, thereby more accurately obtaining traffic state information.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of the present disclosure, which constitute a part of the specification and illustrate the preferred embodiments of the present disclosure, and are used for setting forth the principles of the present disclosure together with the description. It should be noted that the accompanying drawings in the following description are some embodiments of the present disclosure only, and a person of ordinary skill in the art may obtain other accompanying drawings according to these accompanying drawings without making an inventive effort. In the drawings:

FIG. 1 is a flowchart of the method for detecting a traffic state of an embodiment of this application;
FIG. 2(a) is an original frame of traffic surveillance image;
FIG. 2(b) is a region of interest in the traffic surveillance image;
FIG. 2(c) is an image of the region of interest extracted from the original traffic surveillance image;
FIG. 3 is a schematic diagram of generating a contour image according to a color traffic surveillance image in an embodiment of this application;
FIG. 4 is a flowchart of a method for detecting whether there exists an object of a predetermined size that is moving in an embodiment of this application;
FIG. 5 is a schematic diagram of setting auxiliary lines in a foreground image;
FIG. 6 is a flowchart of a method for determining a traffic state according to an occupation ratio and a motion state in an embodiment of this application;
FIG. 7 is a flowchart of detecting a traffic state by using the method for detecting a traffic state of the embodiment of this application;
FIG. 8 is a schematic diagram of a structure of the apparatus for detecting a traffic state of an embodiment of this application;
FIG. 9(A) is a schematic diagram of a structure of the first calculating unit of the embodiment of this application;
FIG. 9(B) is another schematic diagram of the structure of the first calculating unit of the embodiment of this application;
FIG. 9(C) is a further schematic diagram of the structure of the first calculating unit of the embodiment of this application; and
FIG. 10 is a schematic diagram of a structure of the electronic equipment of an embodiment of this application.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

Embodiment 1

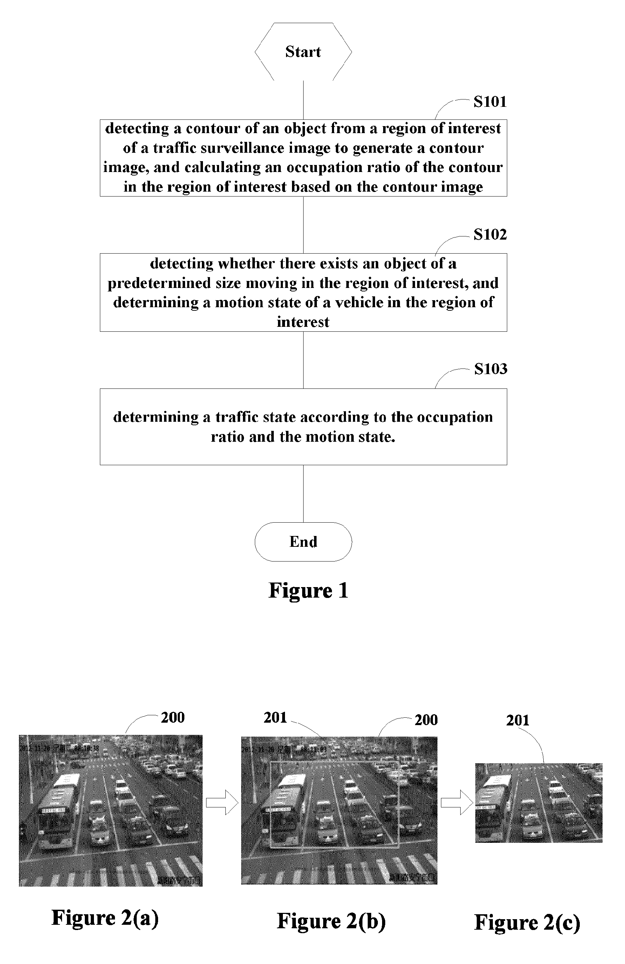

Embodiment 1 of this application provides a method for detecting a traffic state, in which traffic surveillance images are analyzed, so as to detect a traffic state. FIG. 1 is a flowchart of the method for detecting a traffic state of Embodiment 1 of this application. As shown in FIG. 1, the method includes:

step S101: detecting a contour of an object from a region of interest of a traffic surveillance image to generate a contour image, and calculating an occupation ratio of the contour in the region of interest based on the contour image;

step S102: detecting whether there exists an object of a predetermined size moving in the region of interest, and determining a motion state of a vehicle in the region of interest; and

step S103: determining a traffic state according to the occupation ratio and the motion state.

In this embodiment, the traffic state is determined according to the occupation ratio reflecting the number of the vehicles and the motion state of a vehicle, thereby obtaining more accurate traffic state information.

In this embodiment, the region of interest (ROI) of the traffic surveillance image may be a region of an image most reflecting a traffic state. For example, the region of interest may be a region in the image covering relatively large amount of lanes, etc. FIG. 2(a)~FIG.2(c) are schematic diagrams of a region of interest cut out from an image. FIG. 2(a) is an original frame of traffic surveillance image 200, a region 201 in FIG. 2(b) is a region of interest, and FIG. 2(c) is an image of the region of interest extracted from the original traffic surveillance image. In this embodiment, the region of interest may be of a rectangular shape, and may also be of other shapes.

In this embodiment, a size and a position of the region of interest may be set in advance, and may also be separately set for each frame of traffic surveillance image. For consecutive multiple frames of traffic surveillance images, positions and sizes of each frame of regions of interest may be identical, and subsequent image processing may only be performed on the regions of interest, thereby lowering an amount of data for performing image processing, and improving efficiency of the processing. This embodiment is not limited thereto, and all regions in one frame in a traffic surveillance image may be taken as regions of interest.

In step S101 of this embodiment, the contour image corresponding to the region of interest may be obtained, and the occupation ratio may be calculated according to the contour image.

In this embodiment, when the traffic surveillance image is a color image, edge extraction processing may be performed on color components of the region of interest respectively so as to form edge detection images of the color components respectively, and the edge detection images of the color components are combined, so as to generate the contour image. For example, the color image may be RGB color image, or other types of color image. A method of edge extraction processing may be, for example, a Sobel edge detection algorithm, or other edge detection algorithms. A method of combining the edge detection images may be, for example, a simple method of summation of pixel values, or other methods, such as a method of weighted summation. The edge detection images and the contour image may be binarized images. For example, the edge detection images and the contour image may consist of black pixels and white pixels, the white pixels denoting edges in an image. Of course, the edge detection images and the contour image may also be images of other forms.

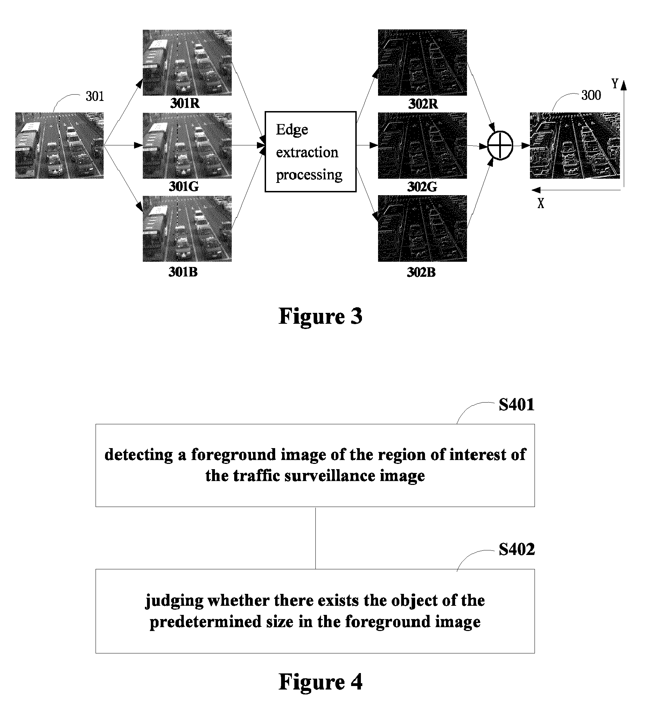

FIG. 3 is a schematic diagram of generating the contour image according to the color traffic surveillance image in this embodiment. As shown in FIG. 3, 301 denotes a region of interest of the RGB color traffic surveillance images, and 301R, 301G and 301B are images of R, G and B components of 301. Corresponding edge detection images 302R, 302G and 302B are formed by respectively performing edge extraction processing on 301R, 301G and 301B, white pixels in the edge detection images representing edges of an object; and 302R, 302G and 302B are combined, so as to obtain the contour image 300, white pixels in the contour image 300 representing a contour of the object.

In this embodiment, a method for forming the contour image is not limited thereto. For example, when the traffic surveillance image is a color image, the color image may also be transformed into a grayscale image, edge extraction processing is performed in a region of interest of the grayscale image so as to form an edge detection image of the grayscale image, and the edge detection image of the grayscale image is taken as the contour image. Or, when the traffic surveillance image is a grayscale image, edge extraction processing may be performed directly on the region of interest so as to form an edge detection image, and the edge detection image is taken as the contour image. Other methods may also be used to form the contour image.

In this embodiment, after the contour image is obtained, a ratio of the number of pixels of the contour in the contour image to a total number of pixels in the region of interest is calculated, and the ratio is taken as the occupation ratio (ratioOccup). For example, the calculation may be performed by employing formula (1) as below:

$$ratioOccup = \frac{numCon}{widthROI \cdot heightROI} \qquad (1);$$

where, numCon is the number of pixels of an object contour in a contour image, widthROI is the number of pixels of a region of interest in a direction of a width X, and heightROI is the number of pixels of a region of interest in a direction of a height Y.

In this embodiment, the occupation ratio (ratioOccup) may reflect the number of vehicles in a region of interest, and the higher the occupation ratio, the larger the number of vehicles in the region of interest.

In step S102 of this embodiment, whether there exists an object of a predetermined size moving in the region of interest of the traffic surveillance image may be detected, so as to determine the motion state of the vehicle in the region of interest.

FIG. 4 is a flowchart of a method for detecting whether there exists an object of a predetermined size that is moving in this embodiment. As shown in FIG. 4, the method may include:

step S401: detecting a foreground image of the region of interest of the traffic surveillance image; and
step S402: judging whether there exists the object of the predetermined size in the foreground image.

In step S401 of this embodiment, the moving object in the image may be detected by using a movement detection method, so as to obtain the foreground image. For example, a differential operation may be performed on the traffic surveillance image and a background image, so as to detect the foreground image of the region of interest, an object in the foreground image representing the moving object. Of course, this embodiment is not limited thereto, and other methods may also be employed to obtain the foreground image.

In step S402 of this embodiment, the predetermined size may correspond to a size of the vehicle in the foreground image. Hence, if the object of the predetermined size exists in the foreground image, it may be deemed that it is very possible that a moving vehicle exists in the region of interest of the traffic surveillance image. And if the size of the object in the foreground image is less than the predetermined size, it may be deemed that the moving object in the region of interest of the traffic surveillance image is not a vehicle, but may possibly be a pedestrian, or a bicycle, etc., or may also be an error of detection.

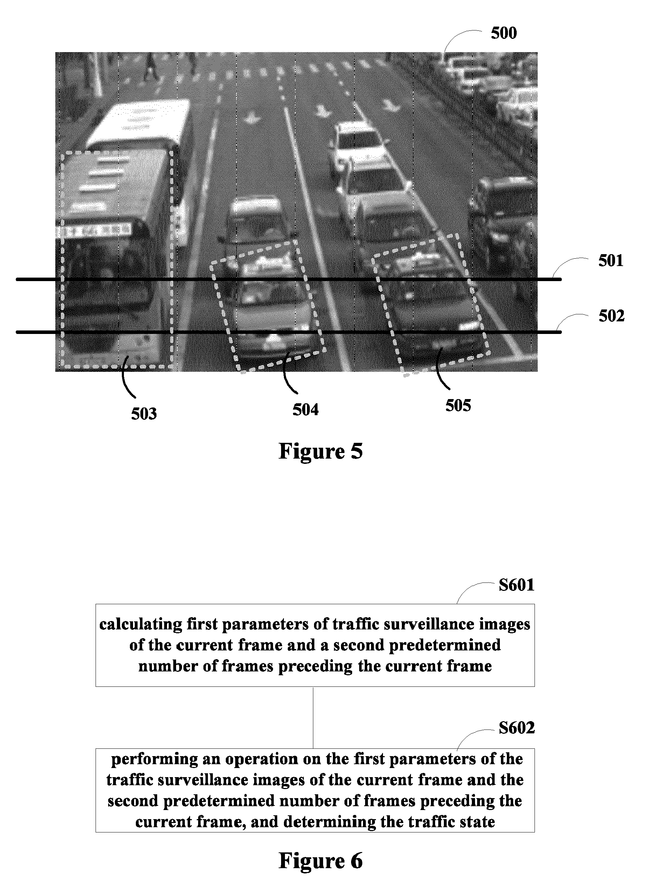

In this embodiment, auxiliary lines may be set in the foreground image, which are used to judge whether there exists an object of a predetermined size in the foreground image. FIG. 5 is a schematic diagram of setting auxiliary lines in the foreground image. As shown in FIG. 5, two auxiliary lines 501, 502 may be set in the foreground image 500. The auxiliary lines 501, 502 may be perpendicular to a moving direction A of the object in the foreground image, and an interval between the auxiliary lines 501, 502 may be identical to a size of a common vehicle in the foreground image. Hence, if the object in the foreground image intersects with the auxiliary lines 501, 502 at the same time, it may be deemed that the object is of the predetermined size, and is very possible a moving vehicle; otherwise, it may be deemed that the size of the object is less than the predetermined size, and is not very possible a moving vehicle. As shown in FIG. 5, objects 503, 504 and 505 intersect with the auxiliary lines 501, 502 at the same time, thus, it is judged that there exist objects of predetermined sized in the foreground image 500.

In FIG. 5, the auxiliary lines 501, 502 are set at a lower part of the foreground image; however, this embodiment is not limited thereto, and the auxiliary lines 501, 502 may also be set at an upper part or other parts of the foreground image. Furthermore, as sizes of the same vehicle are different at different positions in the foreground image, a distance between the auxiliary lines 501, 502 may vary along with different set positions, thereby making the distance to be able to correctly reflect a size of the vehicle in the foreground image.

In this embodiment, when it is judged that there exists no object of a predetermined size in the foreground image, it may be deemed that there exists no object of a predetermined size moving in the region of interest, thereby determining that a motion state of a vehicle in the region of interest of the current traffic surveillance image is a static state.

In this embodiment, when it is judged that there exists an object of a predetermined size in the foreground image, it may be deemed that there exists an object of a predetermined size moving in the region of interest of the current traffic surveillance image, in which case in order to avoid misjudgment, whether there exist objects of predetermined sizes in regions of interest in a first predetermined number of frames preceding a current frame may further be judged; and if yes, it is determined that the vehicle in the region of interest of the traffic surveillance image of the current frame is in a state of movement; otherwise, it is determined that the vehicle in the region of interest of the traffic surveillance image of the current frame is in a static state. For example, let the traffic surveillance image of the current frame is an *N-th* frame, whether there exist objects of predetermined sizes in all regions of interest in $(N\text{-}numfusion\text{+}1)\text{-}th$ to $(N\text{-}1)\text{-}th$ frames of traffic surveillance images may further be judged; and if yes, it is determined that the vehicle in the region of interest of the traffic surveillance image of the current frame is in a state of movement; otherwise, it is determined that the vehicle in the region of interest of the traffic surveillance image of the current frame is in a static state; wherein, the first predetermined number is numfusion-1, and N>(numfusion-1).

In step S103 of this embodiment, the traffic state may be determined according to the occupation ratio calculated in step S101 and the motion state determined in step S102. FIG. 6 is a flowchart of a method for determining a traffic state according to an occupation ratio and a motion state in this embodiment. As shown in FIG. 6, the method includes:

step S601: calculating first parameters of traffic surveillance images of the current frame and a second predetermined number of frames preceding the current frame according to motion states of vehicles in regions of interest of the traffic surveillance images of the current frame and the second predetermined number of frames preceding the current frame and a relationship between the occupation ratio and a threshold value; and

step S602: performing an operation on the first parameters of the traffic surveillance images of the current frame and the second predetermined number of frames preceding the current frame, and determining according to a relationship between a result of the operation and a second parameter that the traffic state to which the traffic surveillance image of the current frame corresponds is jammed, a vehicle flowrate is smooth flow, or a vehicle flowrate is heavy flow.

In step S601 of this embodiment, the threshold value may include a first threshold value (threStat) and a second threshold value (threMov), which correspond respectively to different motion states. For example, when a vehicle in a region of interest of a frame of traffic surveillance image is in a static state, an occupation ratio to which the frame of image corresponds is compared with the first threshold value (threStat), and when the vehicle in the region of interest is in a state of movement, the occupation ratio to which the frame of image corresponds is compared with the second threshold value (threMov). In this embodiment, the first parameters (labelFram) may be binarized parameters. For example, a value of the first parameters may be 1 or 0. Of course, this embodiment is not limited thereto, and the first parameters may also have other values.

For example, in step S601, let the traffic surveillance image of the current frame is an *N-th* frame and the second predetermined number is numFusCla-1, when a vehicle in a region of interest of an *n-th* frame (n is an integer, and (N-numFusCla+1) ≤n≤N) of traffic surveillance image is in a static state, if an occupation ration (ratioOccup) is greater than the first threshold value (threStat), a first parameter (labelFram(n)) to which the frame of image corresponds may be set to be 1; otherwise, the first parameter (labelFram(n)) to which the frame of image corresponds may be set to be 0; when the vehicle in the region of interest of the *n-th* frame is in a moving state, if the occupation ration is greater than the second threshold value (threMov), the first parameter (labelFram(n)) to which the frame of image corresponds may be set to be 1; otherwise, the first parameter (labelFram(n)) to which the *n-th* frame of image corresponds may be set to be 0.

In step S602, summation may be performed on the first parameters of the traffic surveillance images of the current frame and the second predetermined number of frames preceding the current frame, the result of the operation is compared with the second parameter, and the traffic state to which the current frame corresponds is determined according to a comparison result. In this embodiment, the summation is not limited to be performed on the first parameters, and other operations, such as an operation based on a voting algorithm, etc., may also be performed. In this embodiment, the second parameter may be a parameter related to the number of the current frame and the second predetermined number of frames.

For example, in step S602, a formula for performing the summation may be

$$\sum_{n=N-numFusCla+1}^{N} labelFrm(n)$$

the number of the current frame and the second predetermined number (numFusCla-1) of frames may be numFusCla, and the second parameter may be *numFusCla·ratioFus*; where, ratioFus may be value between 0 and 1. When the vehicle in the region of interest of the current frame is in a static state, if the result of the above summation is greater than the second parameter, it is determined that a traffic state to which the traffic surveillance image of the current frame corresponds is being jammed; otherwise, it is determined that the traffic state to which the traffic surveillance image of the current frame corresponds is smooth flow; and when the vehicle in the region of interest of the current frame is in a state of movement, if the result of the above summation is greater than the second parameter, it is determined that the traffic state to which the traffic surveillance image of the current frame corresponds is heavy flow; otherwise, it is determined that the traffic state to which the traffic surveillance image of the current frame corresponds is smooth flow.

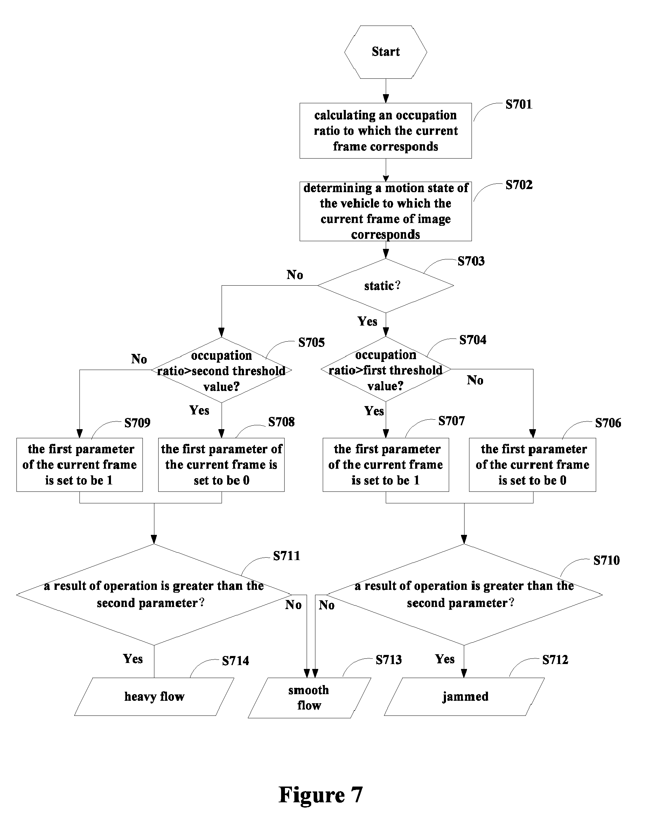

FIG. 7 is a flowchart of detecting a traffic state by using the method for detecting a traffic state of this embodiment. As shown in FIG. 7, the method includes:

step S701: calculating an occupation ratio to which the traffic surveillance image of the current frame corresponds, description of step S101 in FIG. 1 being able to be referred to for a particular calculation method;

step S702: determining a moving state of the vehicle to which the traffic surveillance image of the current frame corresponds, description of step S102 in FIG. 1 being able to be referred to for a particular calculation method;

step S703: judging a moving state to which the traffic surveillance image of the current frame corresponds, going to step S704 if it is judged as being in a static state, and going to step S705 if it is judged as being in a state of movement;

step S704: judging whether an occupation ratio to which the traffic surveillance image of the current frame corresponds is greater than the first threshold value, if it is judged yes, going to step S707 in which the first parameter of the current frame is set to be 1, and if it is judged no, going to step S706 in which the first parameter of the current frame is set to be 0;

step S705: judging whether the occupation ratio to which the traffic surveillance image of the current frame corresponds is greater than the second threshold value, if it is judged yes, going to step S708 in which the first parameter of the current frame is set to be 1, and if it is judged no, going to step S709 in which the first parameter of the current frame is set to be 0;

step S710: performing an operation on the current frame and the second predetermined number of frames preceding the current frame, judging whether a result of the operation is greater than the second parameter, if it is judged yes, going to step S712 in which the traffic state to which the current frame corresponds is determined as being jammed, and if it is judged no, going to step S713 in which the traffic state to which the current frame corresponds is determined as smooth flow; and

step S711: performing an operation on the current frame and the second predetermined number of frames preceding the current frame, judging whether the result of the operation is greater than the second parameter, if it is judged yes, going to step S714 in which the traffic state to which the current frame corresponds is determined as heavy flow, and if it is judged no, going to step S713 in which the traffic state to which the current frame corresponds is determined as smooth flow.

With this embodiment, the traffic state is determined according to the occupation ratio reflecting the number of the vehicles and the motion state of a vehicle, thereby obtaining more accurate traffic state information.

Embodiment 2

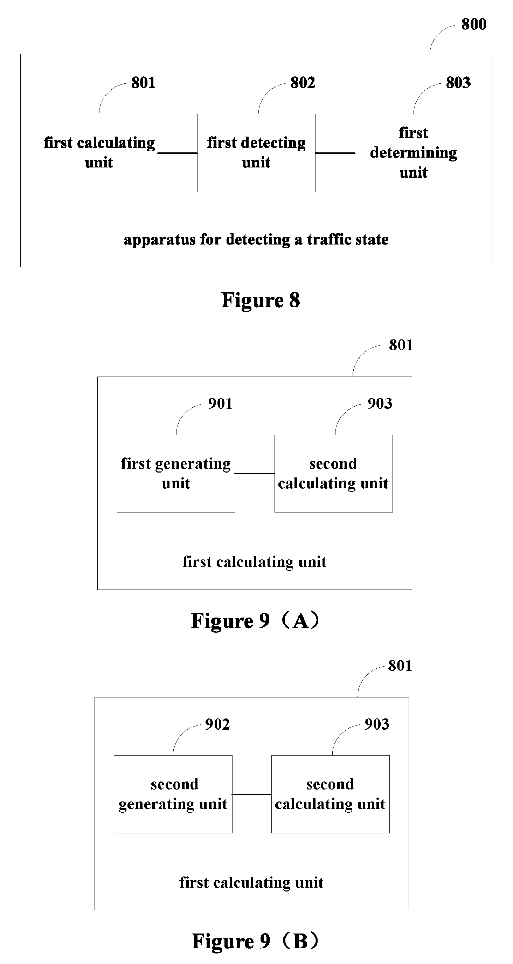

Embodiment 2 of this application provides an apparatus for detecting a traffic state, corresponding to the method for detecting a traffic state of Embodiment 1. FIG. 8 is a schematic diagram of a structure of the apparatus for detecting a traffic state of this embodiment. As shown in FIG. 8, the apparatus 800 for detecting a traffic state includes:

a first calculating unit 801 configured to detect a contour of an object from a region of interest of a traffic surveillance image to generate a contour image, and calculate an occupation ratio of the contour in the region of interest based on the contour image;

a first detecting unit 802 configured to detect whether there exists an object of a predetermined size moving in the region of interest, and determine a motion state of a vehicle in the region of interest; and

a first determining unit 803 configured to determine a traffic state according to the occupation ratio and the motion state.

FIG. 9(A) is a schematic diagram of a structure of the first calculating unit 801 of this embodiment. As shown in FIG. 9(A), the first calculating unit 801 may include a first generating unit 901 and a second calculating unit 903.

FIG. 9(B) is another schematic diagram of the structure of the first calculating unit 801 of this embodiment. As shown in FIG. 9(B), the first calculating unit 801 may include a second generating unit 902 and the second calculating unit 903.

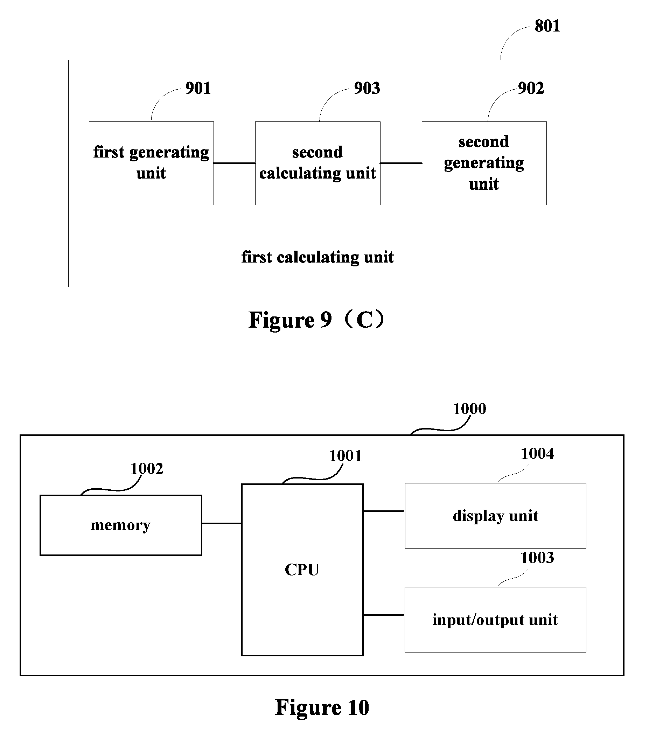

FIG. 9(C) is a further schematic diagram of the structure of the first calculating unit 801 of this embodiment. As shown in FIG. 9(C), the first calculating unit 801 may include the first generating unit 901, the second generating unit 902 and the second calculating unit 903.

As shown in FIGs. 9(A), 9(B) and 9(C), the first calculating unit 801 of this embodiment may include the first generating unit 901 and/or the second generating unit 902 and the second calculating unit 903.

The first generating unit 901, the second generating unit 902 and the second calculating unit 903 shall be described below, respectively.

When the traffic surveillance image is a color image, the first generating unit 901 may perform edge extraction processing on color components of the region of interest respectively so as to form edge detection images of the color components respectively, and combine the edge detection images of the color components, so as to generate the contour image; or, the first generating unit 901 may transform the color image into a grayscale image, perform edge extraction processing in the region of interest so as to form an edge detection image of the grayscale image, and take the edge detection image of the grayscale image as the contour image.

When the traffic surveillance image is a grayscale image, the second generating unit 902 may perform edge extraction processing on the region of interest so as to form an edge detection image, and take the edge detection image as the contour image.

And the second calculating unit 903 is configured to calculate a ratio of the number of pixels of the contour in the contour image to a total number of pixels in the region of interest, and take the ratio as the occupation ratio.

In this embodiment, the first detecting unit 102 detects a foreground image of the region of interest of the traffic surveillance image, and judges whether there exists the object of the predetermined size in the foreground image. And when there exists the object of the predetermined size moving in the region of interest of the traffic surveillance image of a current frame, the first detecting unit 102 may judge whether there exists the object of the predetermined size moving in regions of interest in a first predetermined number of frames preceding the current frame, and if yes, determines that the vehicle in the region of interest of the traffic surveillance image of the current frame is in a state of movement, otherwise, determines that the vehicle in the region of interest of the traffic surveillance image of the current frame is in a static state.

Furthermore, in this embodiment, when there exists no object of the predetermined size moving in the region of interest of the traffic surveillance image of the current frame, the first detecting unit 102 is able to determine that the vehicle in the region of interest of the traffic surveillance image of the current frame is in a static state.

In this embodiment, the first determining unit 103 calculates first parameters of the traffic surveillance images of the current frame and a second predetermined number of frames preceding the current frame according to motion states of vehicles in the region of interest of the current frame and the second predetermined number of frames preceding the current frame and a relationship between the occupation ratio and a threshold value; and performs an operation on the first parameters of the current frame and the second predetermined number of frames preceding the current frame, and determines according to a relationship between a result of operation and a second parameter that the traffic state to which the traffic surveillance image of the current frame corresponds is jammed, a vehicle flowrate is smooth flow, or a vehicle flowrate is heavy flow.

In this embodiment, the description of corresponding steps in Embodiment 1 may be referred to for detailed description of the units of the apparatus 800 for detecting a traffic state, which shall not be described herein any further.

With this embodiment, the traffic state is determined according to the occupation ratio reflecting the number of the vehicles and the motion state of a vehicle, thereby obtaining more accurate traffic state information.

Embodiment 3

Embodiment 3 of this application provides electronic equipment, including the units of the apparatus as described in Embodiment 2.

FIG. 10 is a schematic diagram of a structure of the electronic equipment of the embodiment of this application. As shown in FIG. 10, the electronic equipment 1000 may include a central processing unit (CPU) 1001 and a memory 1002, the memory 1002 being coupled to the central processing unit 1001. The memory 1002 may store various data, and furthermore, it may store programs for detecting a traffic state, and execute the programs under control of the central processing unit 1001.

In an implementation, the functions of the apparatus 800 for detecting a traffic state may be integrated into the central processing unit 1001. The central processing unit 1001 may be configured to carry out the method for detecting a traffic state as described in Embodiment 1, i.e., the central processing unit 1001 may be configured to:

detect a contour of an object from a region of interest of a traffic surveillance image to generate a contour image, and calculating an occupation ratio of the contour in the region of interest based on the contour image; detect whether there exists an object of a predetermined size moving in the region of interest, and determining a motion state of a vehicle in the region of interest; and determine a traffic state according to the occupation ratio and the motion state;

when the traffic surveillance image is a color image, perform edge extraction processing on color components of the region of interest respectively so as to form edge detection images of the color components respectively, and combine the edge detection images of the color components, so as to generate the contour image, or, transform the color image into a grayscale image, perform edge extraction processing in the region of interest so as to form an edge detection image of the grayscale image, and take the edge detection image of the grayscale image as the contour image;

when the traffic surveillance image is a grayscale image, perform edge extraction processing on the region of interest so as to form an edge detection image, and take the edge detection image as the contour image;

calculate a ratio of the number of pixels of the contour in the contour image to a total number of pixels in the region of interest, and take the ratio as the occupation ratio;

detect a foreground image of the region of interest of the traffic surveillance image; and judge whether there exists the object of the predetermined size in the foreground image;

when there exists the object of the predetermined size moving in the region of interest of the traffic surveillance image of a current frame, judge whether there exists the object of the predetermined size moving in regions of interest in a first predetermined number of frames preceding the current frame, and if yes, determine that the vehicle in the region of interest of the traffic surveillance image of the current frame is in a state of movement, otherwise, determine that the vehicle in the region of interest of the traffic surveillance image of the current frame is in a static state;

when there exists no object of the predetermined size moving in the region of interest of the traffic surveillance image of the current frame, determine that the vehicle in the region of interest of the traffic surveillance image of the current frame is in a static state;

calculate first parameters of the traffic surveillance images of the current frame and a second predetermined number of frames preceding the current frame according to moving states of vehicles in the region of interest of the current frame and the second predetermined number of frames preceding the current frame and a relationship between the occupation ratio and a threshold value; and perform an operation on the first parameters of the current frame and the second predetermined number of frames preceding the current frame, and determines according to a relationship between a result of the operation and a second parameter that the traffic state to which the traffic surveillance image of the current frame corresponds is jammed, a vehicle flowrate is smooth flow, or a vehicle flowrate is heavy flow, and the threshold value is related to the moving state.

In another implementation, the apparatus 800 for detecting a traffic state and the central processing unit may be configured separately. For example, the apparatus 800 for detecting a traffic state may be configured as a chip connected to the central processing unit 1001, with its functions being realized under control of the central processing unit.

Furthermore, as shown in FIG. 10, the electronic equipment 1000 may further include an input/output unit 1003, and a display unit 1004, etc.; wherein, functions of the above components are similar to those in the prior art, and shall not be described herein any further. It should be noted that the electronic equipment 1000 does not necessarily include all the parts shown in FIG. 10. And furthermore, the electronic equipment 1000 may include components not shown in FIG. 10, and the prior art may be referred to.

An embodiment of the present disclosure provides a computer-readable program, wherein when the program is executed in electronic equipment, the program enables the computer to carry out the method for detecting a traffic state as described in Embodiment 1 in the electronic equipment.

An embodiment of the present disclosure further provides a storage medium in which a computer-readable program is stored, wherein the computer-readable program enables the computer to carry out the method for detecting a traffic state as described in Embodiment 1 in electronic equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the accompanying drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

For implementations of the present disclosure containing the above embodiments, following supplements are further disclosed.

Supplement 1. An apparatus for detecting a traffic state, including:

a first calculating unit configured to detect a contour of an object from a region of interest of a traffic surveillance image to generate a contour image, and calculate an occupation ratio of the contour in the region of interest based on the contour image;

a first detecting unit configured to detect whether there exists an object of a predetermined size moving in the region of interest, and determine a motion state of a vehicle in the region of interest; and

a first determining unit configured to determine a traffic state according to the occupation ratio and the motion state.

Supplement 2. The apparatus for detecting a traffic state according to supplement 1, wherein the first calculating unit includes a first generating unit, when the traffic surveillance image is a color image, the first generating unit being configured to:

perform edge extraction processing on color components of the region of interest respectively so as to form edge detection images of the color components respectively, and combine the edge detection images of the color components, so as to generate the contour image;

or,

transform the color image into a grayscale image, perform edge extraction processing in the region of interest so as to form an edge detection image of the grayscale image, and take the edge detection image of the grayscale image as the contour image.

Supplement 3. The apparatus for detecting a traffic state according to supplement 1, wherein the first calculating unit includes:

a second generating unit configured to, when the traffic surveillance image is a grayscale image, perform edge extraction processing on the region of interest so as to form an edge detection image, and take the edge detection image as the contour image.

Supplement 4. The apparatus for detecting a traffic state according to supplement 1, wherein the first calculating unit includes:

a second calculating unit configured to calculate a ratio of the number of pixels of the contour in the contour image to a total number of pixels in the region of interest, and take the ratio as the occupation ratio.

Supplement 5. The apparatus for detecting a traffic state according to supplement 1, wherein,
the first detecting unit detects a foreground image of the region of interest of the traffic surveillance image, and judges whether there exists the object of the predetermined size in the foreground image.

Supplement 6. The apparatus for detecting a traffic state according to supplement 1, wherein,
when there exists the object of the predetermined size moving in the region of interest of the traffic surveillance image of a current frame, the first detecting unit judges whether there exists the object of the predetermined size moving in regions of interest in a first predetermined number of frames preceding the current frame, and if yes, determines that the vehicle in the region of interest of the traffic surveillance image of the current frame is in a state of movement, otherwise, determines that the vehicle in the region of interest of the traffic surveillance image of the current frame is in a static state.

Supplement 7. The apparatus for detecting a traffic state according to supplement 1, wherein,
when there exists no object of the predetermined size moving in the region of interest of the traffic surveillance image of a current frame, the first detecting unit determines that the vehicle in the region of interest of the traffic surveillance image of the current frame is in a static state.

Supplement 8. The apparatus for detecting a traffic state according to supplement 1, wherein the first determining unit:

calculates first parameters of the traffic surveillance images of a current frame and a second predetermined number of frames preceding the current frame according to motion states of vehicles in the region of interest of the current frame and the second predetermined number of frames preceding the current frame and a relationship between the occupation ratio and a threshold value;

and performs an operation on the first parameters of the current frame and the second predetermined number of frames preceding the current frame, and determines according to a relationship between a result of the operation and a second parameter that the traffic state to which the traffic surveillance image of the current frame corresponds is jammed, a vehicle flowrate is smooth flow, or a vehicle flowrate is heavy flow.

Supplement 9. The apparatus for detecting a traffic state according to supplement 8, wherein,
the threshold value is related to the motion state.

Supplement 10. A method for detecting a traffic state, including:

detecting a contour of an object from a region of interest of a traffic surveillance image to generate a contour image, and calculating an occupation ratio of the contour in the region of interest based on the contour image;
detecting whether there exists an object of a predetermined size moving in the region of interest, and determining a motion state of a vehicle in the region of interest; and
determining a traffic state according to the occupation ratio and the motion state.

Supplement 11. The method for detecting a traffic state according to supplement 10, wherein when the traffic surveillance image is a color image, the detecting a contour of an object to generate a contour image includes:

performing edge extraction processing on color components of the region of interest respectively so as to form edge detection images of the color components respectively, and combine the edge detection images of the color components, so as to generate the contour image;

or,

transforming the color image into a grayscale image, performing edge extraction processing in the region of interest so as to form an edge detection image of the grayscale image, and taking the edge detection image of the grayscale image as the contour image.

Supplement 12. The method for detecting a traffic state according to supplement 10, wherein when the traffic surveillance image is a grayscale image, the detecting a contour of an object to generate a contour image includes:

performing edge extraction processing on the region of interest so as to form an edge detection image, and taking the edge detection image as the contour image.

Supplement 13. The method for detecting a traffic state according to supplement 10, wherein the calculating an occupation ratio based on the contour image includes:

calculating a ratio of the number of pixels of the contour in the contour image to a total number of pixels in the region of interest, and taking the ratio as the occupation ratio.

Supplement 14. The method for detecting a traffic state according to supplement 10, wherein the detecting whether there exists an object of a predetermined size moving in the region of interest includes:

detecting a foreground image of the region of interest of the traffic surveillance image; and
judging whether there exists the object of the predetermined size in the foreground image.

Supplement 15. The method for detecting a traffic state according to supplement 10, wherein the determining a motion state of a vehicle in the region of interest includes:

when there exists the object of the predetermined size moving in the region of interest of the traffic surveillance image of a current frame, judging whether there exists the object of the predetermined size moving in regions of interest in a first predetermined number of frames preceding the current frame, and if yes, determining that the vehicle in the region of interest of the traffic surveillance image of the current frame is in a state of movement, otherwise, determining that the vehicle in the region of interest of the traffic surveillance image of the current frame is in a static state.

Supplement 16. The method for detecting a traffic state according to supplement 10, wherein the determining a motion state of a vehicle in the region of interest includes:

when there exists no object of the predetermined size moving in the region of interest of the traffic surveillance image of the current frame, determining that the vehicle in the region of interest of the traffic surveillance image of the current frame is in a static state.

Supplement 17. The method for detecting a traffic state according to supplement 10, wherein the determining a traffic state according to the occupation ratio and the motion state includes:

calculating first parameters of the traffic surveillance images of the current frame and a second predetermined number of frames preceding the current frame according to motion states of vehicles in the region of interest of the current frame and the second predetermined number of frames preceding the current frame and a relationship between the occupation ratio and a threshold value; and
performing an operation on the first parameters of the current frame and the second predetermined number of frames preceding the current frame, and determines according to a relationship between a result of the operation and a second parameter that the traffic state to which the traffic surveillance image of the current frame corresponds is jammed, a vehicle flowrate is smooth flow, or a vehicle flowrate is heavy flow.

Supplement 18. The method for detecting a traffic state according to supplement 17, wherein,
the threshold value is related to the motion state.
Supplement 19. Electronic equipment, including the apparatus for detecting a traffic state as described in any one of supplements 1-9.

**Claims**

1.  An apparatus for detecting a traffic state, comprising:

    a first calculating unit configured to detect a contour of an object from a region of interest of a traffic surveillance image to generate a contour image, and calculate an occupation ratio of the contour in the region of interest based on the contour image;
    a first detecting unit configured to detect whether there exists an object of a predetermined size moving in the region of interest, and determine a motion state of a vehicle in the region of interest; and
    a first determining unit configured to determine a traffic state according to the occupation ratio and the motion state.

2.  The apparatus for detecting a traffic state according to claim 1, wherein the first calculating unit comprises a first generating unit, when the traffic surveillance image is a color image, the first generating unit being configured to:

    perform edge extraction processing on color components of the region of interest respectively so as to form edge detection images of the color components respectively, and combine the edge detection images of the color components, so as to generate the contour image;
    or,
    transform the color image into a grayscale image, perform edge extraction processing in the region of interest so as to form an edge detection image of the grayscale image, and take the edge detection image of the grayscale image as the contour image.

3.  The apparatus for detecting a traffic state according to claim 1, wherein the first calculating unit comprises:

    a second generating unit configured to, when the traffic surveillance image is a grayscale image, perform edge extraction processing on the region of interest so as to form an edge detection image, and take the edge detection image as the contour image.

4.  The apparatus for detecting a traffic state according to claim 1, wherein the first calculating unit comprises:

    a second calculating unit configured to calculate a ratio of the number of pixels of the contour in the contour image to a total number of pixels in the region of interest, and take the ratio as the occupation ratio.

5.  The apparatus for detecting a traffic state according to claim 1, wherein,
    the first detecting unit detects a foreground image of the region of interest of the traffic surveillance image, and judges whether there exists the object of the predetermined size in the foreground image.

6.  The apparatus for detecting a traffic state according to claim 1, wherein,
    when there exists the object of the predetermined size moving in the region of interest of the traffic surveillance image of a current frame, the first detecting unit judges whether there exists the object of the predetermined size moving in regions of interest in a first predetermined number of frames preceding the current frame, and if yes, determines that the vehicle in the region of interest of the traffic surveillance image of the current frame is in a state of movement, otherwise, determines that the vehicle in the region of interest of the traffic surveillance image of the current frame is in a static state.

7.  The apparatus for detecting a traffic state according to claim 1, wherein,
    when there exists no object of the predetermined size moving in the region of interest of the traffic surveillance image of a current frame, the first detecting unit determines that the vehicle in the region of interest of the traffic surveillance image of the current frame is in a static state.

8.  The apparatus for detecting a traffic state according to claim 1, wherein the first determining unit:

    calculates first parameters of the traffic surveillance images of a current frame and a second predetermined number of frames preceding the current frame according to motion states of vehicles in the region of interest of the current frame and the second predetermined number of frames preceding the current frame and a relationship between the occupation ratio and a threshold value;

and performs an operation on the first parameters of the current frame and the second predetermined number of frames preceding the current frame, and determines according to a relationship between a result of the operation and a second parameter that the traffic state to which the traffic surveillance image of the current frame corresponds is jammed, a vehicle flowrate is smooth flow, or a vehicle flowrate is heavy flow.

9. The apparatus for detecting a traffic state according to claim 8, wherein,
the threshold value is related to the motion state.

10. A method for detecting a traffic state, comprising:

detecting a contour of an object from a region of interest of a traffic surveillance image to generate a contour image, and calculating an occupation ratio of the contour in the region of interest based on the contour image;
detecting whether there exists an object of a predetermined size moving in the region of interest, and determining a motion state of a vehicle in the region of interest; and
determining a traffic state according to the occupation ratio and the motion state.

11. The method for detecting a traffic state according to claim 10, wherein when the traffic surveillance image is a color image, the detecting a contour of an object to generate a contour image comprises:

performing edge extraction processing on color components of the region of interest respectively so as to form edge detection images of the color components respectively, and combine the edge detection images of the color components, so as to generate the contour image;
or,
transforming the color image into a grayscale image, performing edge extraction processing in the region of interest so as to form an edge detection image of the grayscale image, and taking the edge detection image of the grayscale image as the contour image.

12. The method for detecting a traffic state according to claim 10, wherein when the traffic surveillance image is a grayscale image, the detecting a contour of an object to generate a contour image comprises:

performing edge extraction processing on the region of interest so as to form an edge detection image, and taking the edge detection image as the contour image.

13. The method for detecting a traffic state according to claim 10, wherein the calculating an occupation ratio based on the contour image comprises:

calculating a ratio of the number of pixels of the contour in the contour image to a total number of pixels in the region of interest, and taking the ratio as the occupation ratio.

14. The method for detecting a traffic state according to claim 10, wherein the detecting whether there exists an object of a predetermined size moving in the region of interest comprises:

detecting a foreground image of the region of interest of the traffic surveillance image; and
judging whether there exists the object of the predetermined size in the foreground image.

15. The method for detecting a traffic state according to claim 10, wherein the determining a motion state of a vehicle in the region of interest comprises:

when there exists the object of the predetermined size moving in the region of interest of the traffic surveillance image of a current frame, judging whether there exists the object of the predetermined size moving in regions of interest in a first predetermined number of frames preceding the current frame, and if yes, determining that the vehicle in the region of interest of the traffic surveillance image of the current frame is in a state of movement, otherwise, determining that the vehicle in the region of interest of the traffic surveillance image of the current frame is in a static state.

16. The method for detecting a traffic state according to claim 10, wherein the determining a motion state of a vehicle in the region of interest comprises:

when there exists no object of the predetermined size moving in the region of interest of the traffic surveillance image of the current frame, determining that the vehicle in the region of interest of the traffic surveillance image of the current frame is in a static state.

17. The method for detecting a traffic state according to claim 10, wherein the determining a traffic state according to the occupation ratio and the motion state comprises:

calculating first parameters of the traffic surveillance images of the current frame and a second predetermined number of frames preceding the current frame according to motion states of vehicles in the region of interest of the current frame and the second predetermined number of frames preceding the current frame and a relationship between the occupation ratio and a threshold value; and
performing an operation on the first parameters of the current frame and the second predetermined number of frames preceding the current frame, and determines according to a relationship between a result of the operation and a second parameter that the traffic state to which the traffic surveillance image of the current frame corresponds is jammed, a vehicle flowrate is smooth flow, or a vehicle flowrate is heavy flow.

18. The method for detecting a traffic state according to claim 17, wherein,
the threshold value is related to the motion state.

19. Electronic equipment, comprising the apparatus for detecting a traffic state as described in claim 1.

Start

S101

detecting a contour of an object from a region of interest
of a traffic surveillance image to generate a contour
image, and calculating an occupation ratio of the contour
in the region of interest based on the contour image

S102

detecting whether there exists an object of a
predetermined size moving in the region of interest, and
determining a motion state of a vehicle in the region of
interest

S103

determining a traffic state according to the occupation
ratio and the motion state.

End

**Figure 1**

200

201

200

201

**Figure 2(a)**

**Figure 2(b)**

**Figure 2(c)**

**Figure 3**

S401

detecting a foreground image of the region of interest of the traffic surveillance image

S402

judging whether there exists the object of the predetermined size in the foreground image

**Figure 4**

**Figure 5**

**Figure 6**

**Figure 7**

800

801 802 803

| first calculating unit | | first detecting unit | | first determining unit |

apparatus for detecting a traffic state

**Figure 8**

801

901 903

| first generating unit | | second calculating unit |

first calculating unit

**Figure 9（A）**

801

902 903

| second generating unit | | second calculating unit |

first calculating unit

**Figure 9（B）**

801

901 903 902

| first generating unit | second calculating unit | second generating unit |

first calculating unit

Figure 9（C）

1000

1002 1001 1004

memory

CPU

display unit

1003

input/output unit

Figure 10

Europäisches
Patentamt

European
Patent Office

Office européen
des brevets

# EUROPEAN SEARCH REPORT

Application Number

EP 16 19 1381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIYING LI ET AL: "A Traffic State Detection Tool for Freeway Video Surveillance System", PROCEDIA - SOCIAL AND BEHAVIORAL SCIENCES, vol. 96, 6 November 2013 (2013-11-06), pages 2453-2461, XP055348932, ISSN: 1877-0428, DOI: 10.1016/j.sbspro.2013.08.274 * Section 2; figure 1 * | 1-19 | INV. G06K9/00 G08G1/04 |
| X | QINGLIN JIANG ET AL: "Traffic States Detection based on Block Matching", PROCEEDINGS OF THE INTERNATIONAL CONFERENCE ON CHEMICAL,MATERIAL AND FOOD ENGINEERING, 25 July 2015 (2015-07-25), XP055348924, Paris, France DOI: 10.2991/cmfe-15.2015.211 ISBN: 978-94-625-2093-6 * Section III and IV, Figure 5 * | 1-19 | |

TECHNICAL FIELDS
SEARCHED    (IPC)

G06K
G08G

The present search report has been drawn up for all claims

| Place of search | Date of completion of the search | Examiner |
|---|---|---|
| The Hague | 23 February 2017 | Boltz, Sylvain |